(19) Europäisches Patentamt
European Patent Office
Office européen des brevets

(11) EP 0 656 032 B1

(12) **EUROPÄISCHE PATENTSCHRIFT**

(45) Veröffentlichungstag und Bekanntmachung des Hinweises auf die Patenterteilung:
**07.04.1999 Patentblatt 1999/14**

(21) Anmeldenummer: **93919153.2**

(22) Anmeldetag: **24.08.1993**

(51) Int Cl.6: **C08J 5/18**, C08L 3/00

(86) Internationale Anmeldenummer:
**PCT/EP93/02270**

(87) Internationale Veröffentlichungsnummer:
**WO 94/04600 (03.03.1994 Gazette 1994/06)**

(54) **VERFAHREN ZUM HERSTELLEN VON BIOLOGISCH ABBAUBAREN FOLIEN AUF DER BASIS VON PFLANZLICHEN ROHSTOFFEN**

PROCESS FOR PRODUCING BIODEGRADABLE FILMS ON THE BASIS OF VEGETABLE RAW MATERIALS

PROCEDE ET PRODUCTION DE FILMS BIODEGRADABLES A BASE DE MATIERES PREMIERES VEGETALES

(84) Benannte Vertragsstaaten:
**AT BE CH DE DK ES FR GB GR IE IT LI LU MC NL PT SE**

(30) Priorität: **24.08.1992 DE 4228016**

(43) Veröffentlichungstag der Anmeldung:
**07.06.1995 Patentblatt 1995/23**

(73) Patentinhaber: **bio-tec Biologische Naturverpackungen GmbH & Co. KG**
**D-46446 Emmerich (DE)**

(72) Erfinder:
- **LÖRCKS, Jürgen**
  **D-46459 Rees (DE)**
- **POMMERANZ, Winfried**
  **D-32130 Enger (DE)**
- **HEUER, Joachim**
  **D-47559 Kranenburg (DE)**
- **KLENKE, Kurt**
  **D-47533 Kleve (DE)**
- **SCHMIDT, Harald**
  **D-46446 Emmerich (DE)**

(74) Vertreter: **VOSSIUS & PARTNER**
**Postfach 86 07 67**
**81634 München (DE)**

(56) Entgegenhaltungen:
**EP-A- 0 252 270**
**EP-A- 0 474 095**
**EP-A- 0 516 030**
**WO-A-90/10671**
**WO-A-90/14938**
**WO-A-93/06013**
**GB-A- 2 190 093**
**GB-A- 2 208 651**
**US-A- 3 243 308**
**US-A- 4 076 846**

- **U. Bauer, "Verpackung", 1. Aufl. 1981, Vogel-Verlag, S.250**
- **Book no. , , 'VERPACKUNG', U. BAUER VOGEL-VERLAG,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 656 032 B1

Printed by Jouve, 75001 PARIS (FR)

## Beschreibung

Die Erfindung betrifft ein Verfahren zum Herstellen von biologisch abbaubaren Folien auf der Basis von pfanzlicnen Rohstoffen. Solche Verfahren gewinnen bei der Herstellung von z.B. umweltverträglichen Verpackungsmaterialien immer mehr an Bedeutung. Das Ziel ist es dabei, Folien mit hinreichender Festigkeit zu erzeugen, die sich leicht wieder in ihre ursprünglichen, natürlichen Bestandteile auflösen bzw. zersetzen lassen.

Bekannt sind schon Verfahren zur Herstellung von thermoplastischen Granulaten unter Mitverwendung von Stärken (US-A-4 133 784, US-A-4 021 388, DE-A-23 22 440). Diese Granulate werden dann in einem zweiten Arbeitsgang zu Folien verarbeitet. Dabei dient die Stärke als Füllstoff in synthetischen Polymeren. Weiterhin sind auch Verfahren zur Herstellung und Modifizierung von destrukturierter, thermoplastischer Stärke bekannt (EP-A-378646, EP-A-397819).

Die WO 90/05161 A1 zeigt eine thermoplastisch verarbeitbare Stärke sowie ein Verfahren zu deren Herstellung. Dabei werden einem Stärkerohstoff ein Zuschlagsstoff und gegebenenfalls verschiedene weitere Additive zugefügt, um die Schmelztemperatur der Stärke auf einen Wert zu senken, der unterhalb der Zersetzungstemperatur der Stärke liegt. Damit soll die Struktur der Stärkeschmelze zur Erreichung einer einfacheren Prczeßführung bei der Herstellung von thermoplastischer Stärke und deren Weiterverarbeitung verbessert werden.

In der EP-A1-0474095 wird ein Verfahren zur Herstellung von biologisch abbaubaren Gebrauchsgegenständen, wie Tellern, Bechern, Karton usw., offenbart, wobei als Ausgangsmaterial ein pflanzlicher Rohstoff, wie Stärke, eingesetzt wird. Dieser wird mit Additiven versehen, plastizifiziert und in einem ersten Extruder in ein Zwischenprodukt als Strang oder Granulat umgewandelt. Dieses Zwischenprodukt wird danach in einem zweiten Extruder in den gewünschten Gebrauchsgegenstand geformt.

Ähnlich erfolgt die heute übliche Folienherstellung aus pflanzlichen Rohstoffen in zwei, voneinander völlig getrennten Verfahrensschritten. Die im Extrusionsverfahren destrukturierte und plastifizierte Schmelze eines Biopolymeren wird zum Ende des ersten Verfahrensschrittes abgekühlt, unter hohem Druck durch eine Düse gepreßt und granuliert. Das Abkühlen der Schmelze ist erforderlich, um ein Aufschäumen des Biopolymeren zu verhindern. Die hierbei auftretende hohe Scherbelastung bewirkt eine Schädigung der molekularen Struktur der Stärke unter Abspaltung verschiedener Molekülfragmente. Die Polymerketten der Stärke werden verkürzt und das Molekulargewicht wird verringert. Das hergestellte Stärkegranulat wird anschließend in einem erneuten Extrusionsverfahren unter ähnlichen Bedingungen zur Folie verarbeitet. Hierbei erfolgt erneut ein Abbau des Biopolymeren unter Molekulargewichtsverringerung und Kettenverkürzung. Die zweifache Schädigung der molekularen Struktur, insbesondere die Verkürzung der Amyloseketten, bewirkt unmittelbar eine Verschlechterung der Gebrauchseigenschaften (Reißfestigkeit, Dehnbarkeit usw.) der auf diesem Wege hergestellten Folien. Außerdem ist die zweifache Extrusion zeit-, energie- und kostenaufwendig.

Die WO-90/14938 beschreibt ein derartiges 2-stufiges Verfahren zum Herstellen von Flachmaterial aus hochamylosehaltiger Stärke oder Stärkederivaten durch Granulieren und anschließender Folienextrusion.

Demgegenüber liegt der Erfindung die Aufgabe zugrunde, ein kostengünstiges Verfahren zum Herstellen von biologisch abbaubaren Folien auf der Basis von pflanzlichen Rohstoffen zur Verfügung zu stellen, wobei die Nachteile im Stand der Technik vermieden, die Qualität der erzeugten Folien verbessert und z.B. eine hohe Reißfestigkeit und Dehnbarkeit erreicht werden.

Diese Aufgabe wird mit den Merkmalen der Patentansprüche gelöst.

Bei der Lösung geht die Erfindung von dem Grundgedanken aus, die pflanzlichen Rohstoffe in Form von Stärke oder Starkederivaten, Cellulosederivaten oder Pflanzengummi in einem kontinuierlichen und einstufigen Verfahren ohne Zwischenprodukte und Unterbrechungen gegebenenfalls zu desintegrieren und zu modifizieren, zu plastifizieren sowie zu komprimieren und durch Blasextrusion in eine Folie auszuformen; eine geeignete Konfiguration einer Schneckenvorrichtung, die das Material für die Folien transportiert, und ein geeignetes Temperaturregime gewährleisten eine schonende Verarbeitung der Biopolymeren.

Die pflanzlichen Rohstoffe können z.B. in folgender Form vorliegen : eine native Stärke in natürlicher oder Hybridform, die beispielsweise der Kartoffel, dem Manjok, der Erbse, der Bohne, dem Mais, dem wachsigen Mais, dem Mais mit hohem Amylosegehalt, dem Getreide, wie Weizen und Fraktionen, die hieraus hergestellt sein können, der Gerste oder dem Sorghum entstammen, ein Stärkederivat, das aus einer auf physikalischem und/oder chemischem Weg modifizierten Stärke besteht, ein Cellulosederivat, ein Pflanzengummi (Kohlenhydratpolymere) eine Hemicellulose, oder ein Hydrokolloid, oder ein Gemisch aus einem oder mehreren dieser Rohstoffe.

Erfindungsgemäß wird das folgende Temperaturregime gefahren: erste Zone (1): 10 bis 80°C, vorzugsweise 50°C; zweite Zone (2): 10 bis 150°C, vorzugsweise 80 bis 100°C; dritte Zone (3): 70 bis 200°C, vorzugsweise 120 bis 160°C; vierte Zone (4): 70 bis 200°C, vorzugsweise 120 bis 160°C; fünfte Zone (5): 70 bis 200°C, vorzugsweise 80 bis 120°C; sechste Zone (6): 40 bis 200°C; vorzugsweise 40 bis 60°C; an der Düse (7; 8) : 40 bis 150°C, vorzugsweise 50 bis 70°C. Bevorzugt ist, daß die Folien in der Trockenmasse 40 bis 100 Gew.-%, vorzugsweie 75 bis 95 Gew.-% Stärke, Stärkederivate, Cellulosederivate oder Pflanzengummi enthalten.

Bei dem erfindungsgemäßen Verfahren kann als ein Additiv Glycerin-Monostearat als Emulgator, vorzugsweise in der ersten Zone (1), zugeführt werden. Erfindungsgemäß kann als ein Additiv Glycerin als Plastifizierungsmittel vorzugsweise in der zweiten Zone (2) zugeführt werden. Erfindungsgemäß kann als ein Additiv Wasser as Lösungsmittel, vorzugsweise in der zweiten Zone (2) zugeführt werden.

Im Rahmen der Erfindung kann als ein Additiv Kaliumsorbat als Konservierungsmittel, vorzugsweise in der ersten Zone (1) zugeführt werden.

Bei dem erfindungsgemäßen Verfahren können vorzugsweise die Folien (15) in der Trockenmasse 0 bis 25 Gew.-%, vorzugsweise 0,1 bis 2,5 Gew.-% Glycerin-monostearat, 0 bis 40 Gew.-%, vorzugsweise 10 bis 28 Gew.-% Glycerin; und 0 bis 5 Gew.-%, vorzugsweise 0,1 bis 0,5 Gew.-% Kaliumsorbat enthalten.

Erfindungsgemäß können die Folien (15) 0 bis 35 Gew.-%, vorzugsweise 10 bis 20 Gew.-% Wasser enthalten.

Die Erfindung hat folgende Vorteile.

Das erfindungsgemäße Verfahren vermindert die Scherbelastung, die Fragmentierung und den Molekulargewichtsverlust der Biopolymere. Es ergibt sich eine erhebliche Vereinfachung des Herstellungsprozess, weil Reaktionsextruder und Folienerzeugung eine verfahrenstechnische Einheit bildet. Das Problem der Lagerung von hygroskopischen Pellets im Aluminiumverbund unter Vakuum entfällt. Die Compoundierung und die Folienerzeugung erfolgen in einem Produktionsschritt. Die Produktion ist kostengünstiger, da die Verpackung und der Transport von Pellets entfallen und geringere Personal- und Anlagekosten auftreten. Außerdem kann Energie für den Transport und das Aufschmelzen der Pellets eingespart werden. Die erzeugten Folien weisen gegenüber dem Stand der Technik verbesserte Gebrauchseigenschaften auf.

Im folgenden wird die Erfindung anhand der Zeichnungen näher erläutert. Es zeigen:

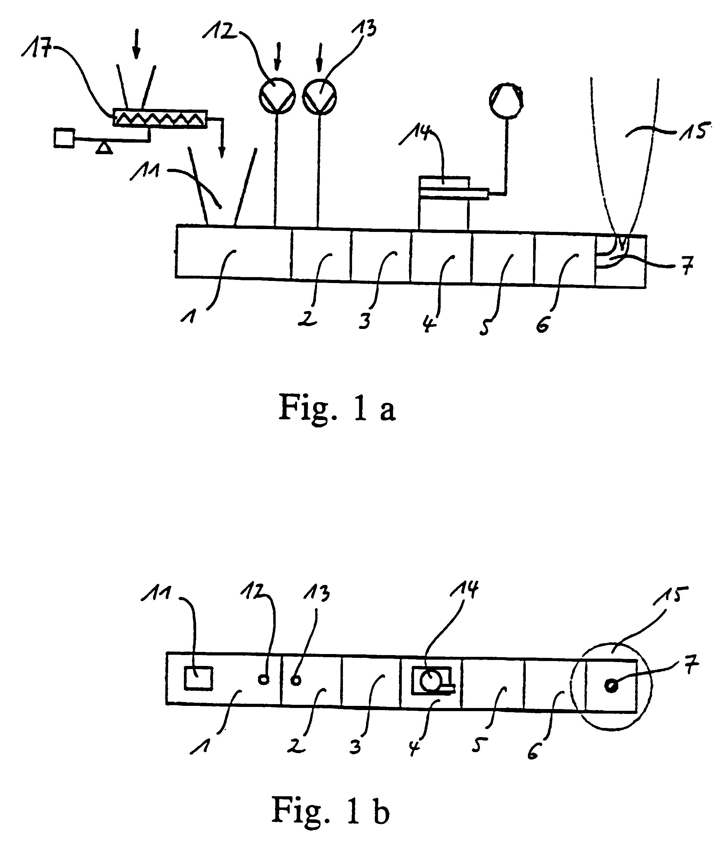

- Fig. 1a eine Seitenansicht einer erfindungsgemäßen Fertigungsstrecke für geblasene Folien.
- Fig. 1b eine Draufsicht auf die erfindungsgemäße Fertigungsstrecke gemäß Fig. 1a,
- Fig. 2a eine Seitenansicht einer Fertigungsstrecke für Flachfolien,
- Fig. 2b eine Draufsicht auf die Fertigungsstrecke gemäß Fig. 2a,
- Fig. 3a eine erfindungsgemäße Ausführungsform des Endes einer Schneckenvorrichtung mit einer Doppelringdüse,
- Fig. 3b eine erfindungsgemäße Ausführungsform des Endes einer Schneckenvorrichtung mit einer Ringdüse, und
- Fig. 3c ein Beispiel des Endes einer Schneckenvorrichtung mit einer Flachdüse.

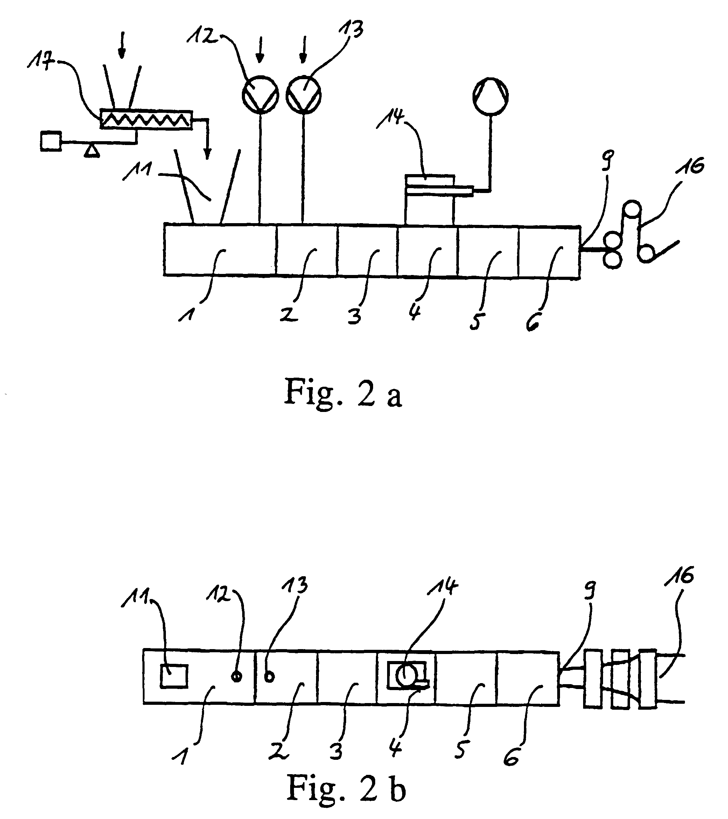

Die Figuren la und 1b zeigen eine erfindungsgemäße Fertigungsstrecke für geblasene Folien in zwei Ansichten. Dargestellt sind die einzelnen Fertigungszonen 1 bis 6 und eine Düse 7, die untereinander durch eine Schnekkenvorrichtung (nicht dargestellt), die das Material für die Folie transportiert und durchmischt bzw. knetet, verbunden sind. Eine Mischung aus festen pflanzlichen Rohstoffen und gegebenenfalls Additiven wird durch die Dosiereinrichtung 17 (nur in Fig. la dargestellt) dosiert und über den ersten Einlaß 11 der ersten Zone 1 zugeführt. Gleichzeitig können über den zweiten Einlaß 12 flüssige Additive zugeführt werden. Die Additive können Emulgatoren, Plastifizierungsmittel, Konservierungsmittel und Wasser sein. In der Zone 2 wird die Mischung erhitzt und geknetet, und es können flüssige Additive über einen dritten Einlaß 13 zugeführt werden. In einer dritten Zone 3 erfolgt eine weitere Temperaturerhöhung und eine Reaktion des pflanzlichen Rohstoffs mit den Additiven, wobei eine Schmelze entsteht. In einer vierten Zone 4 wird die Schmelze durch eine Vakuumeinrichtung 14 evakuiert, wobei Wasser aus der Schmelze verdampft und die Schmelze dadurch abgekühlt wird. Eine weitere Abkühlung der Schmelze erfolgt in einer fünften Zone 5. In einer sechsten Zone 6 wird die Schmelze komprimiert, um einen Düsendruck aufzubauen, und schließlich durch eine Ringdüse 7 zu einer Folie 15 verblasen. In den Figuren 2a und 2b ist eine Fertigungsstrecke dargestellt (Dosiereinrichtung 17 ist nur in Fig. 2a dargestellt), bei der im Gegensatz zur Erfindung mittels einer Flachdüse 9 eine Flachfolie 16 ausgeformt wird.

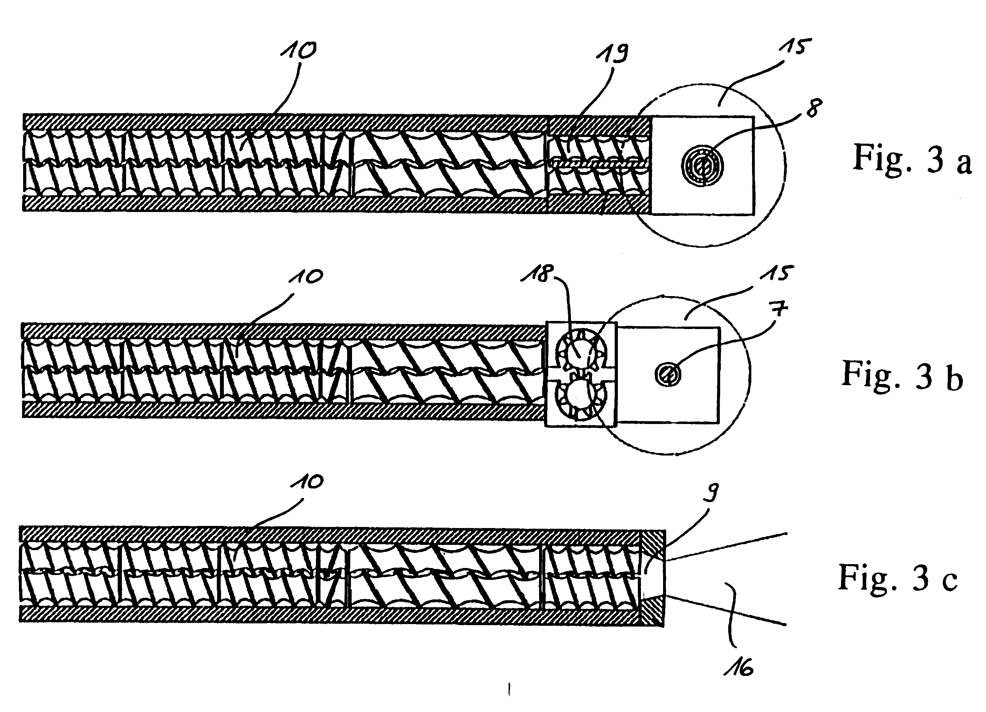

Fig. 3a zeigt eine erfindungsgemäße Ausführungsform, bei der eine geblasene Folie 15 mittels einer Doppelringdüse 8 erzeugt wird. Hinter einer Doppelschnecke 10 sind für den Transport der Schmelze zur Düse 8 zwei Einfachschnecken 19 angeordnet.

In Fig. 3b wird eine geblasene Folie 15 durch eine Ringdüse 7 erzeugt. Diese wird durch eine Zahnradpumpe 18, die hinter der Doppelschnecke 10 angeordnet ist, mit der Schmelze beliefert.

Bei dem Vergleichsbeispiel mit einer Flachdüse 9 zur Erzeugung einer Flachfolie 16 gemäß Fig. 3c führt die Doppelschnecke 10 die Schmelze unmittelbar an die Düse 9 heran.

Die Schneckenvorrichtung 10 ist vorzugsweise als Doppelschnecke ausgebildet und weist in den einzelnen Zonen 1 bis 6 bevorzugt folgende Konfigurationen auf: Rechtsgängig in Zonen 1 und 2; gegebenenfalls mehrfach abwechselnd rechts- und linksgängig in Zone 3; steil rechtsgängig in den Zonen 4 und 5; und flach rechtsgängig in Zone 6. Diese unterschiedlichen Konfigurationen bewirken eine angepaßte unterschiedliche Transportgeschwindigkeit, Knetung und Durchmischung in den einzelnen Zonen und somit die gewünschte, schonende Behandlung der Biopolymeren.

Die Zonen 1 bis 6 und die Düsen 7, 8 oder 9 haben eine angepaßte Temperaturverteilung. Ein bevorzugtes Temperaturregime ist: Zone 1: 50°C, Zone 2: 80-100°C, Zone 3: 120-160°C, Zone 4: 120-160°C, Zone 5: 80 bis 120°C, Zone 6: 40-60°C und an den Düsen 7, 8 oder 9: 50 bis 70°C.

Im folgenden werden Ausführungsbeispiele des erfindungsgemäßen Verfahrens dargestellt. Verwendet wurde eine Zweiwellenschneckenmaschine (ZSK 40) der Firma Werner und Pfleiderer.

**Beispiel 1**

Eine Feststoffmischung aus Kartoffelstärke und einem Emulgator (Mono-Diglycerid) sowie die flüssigen Komponenten Wasser und Glycerin wurden kontinuierlich der Zweiwellenschneckenmaschine zugeführt.

| Feststoffe: | |
|---|---|
| Kartoffelstärke | 99 % |
| Emulgator | 1 % |
| | 100 % |

| Flüssige Additive: | |
|---|---|
| Wasser | 14 % |
| Glycerin | 86 % |
| | 100 % |

| Mischungsverhältnis im Verfahrensteil: | |
|---|---|
| Feststoffe | 75 % |
| Flüssigkeit | 25 % |

| Temperaturprofil: | |
|---|---|
| Zone 1 | 50°C |
| Zone 2 | 80°C |
| Zone 3 | 120°C |
| Zone 4 | 120°C |
| Zone 5 | 80°C |
| Zone 6 | 60°C |
| Düse | 60°C |

| | |
|---|---|
| Drehzahl | 170 $min^{-1}$ |
| Drehmoment | 30 % |
| Druck | 80 bar |
| Aufblasverhältnis | 1:4 |

Es wurde eine transparente Folie mit folgenden Eigenschaften erhalten:

| | |
|---|---|
| Folienstärke | 35 µm |
| Reißfestigkeit längs | 12,1 $N/mm^2$ |
| Reißfestigkeit quer | 11,8 $N/mm^2$ |
| Dauer der Auflösung von 10 g Folie in 100 g Wasser bei 20°C | 15 Minuten |

**Beispiel 2**

Eine Feststoffmischung aus Kartoffelstärke und einem Emulgator (Mono-Diglycerid) sowie die flüssigen Komponenten Wasser und Glycerin wurden kontinuierlich der Zweiwellenschneckenmaschine zugeführt.

| Feststoffe: | |
|---|---|
| Kartoffelstärke | 99 % |
| Emulgator | 1 % |
| | 100 % |

| Flüssige Additive: | |
|---|---|
| Wasser | 20 % |
| Glycerin | 80 % |
| | 100 % |

| Mischungsverhältnis im Verfahrensteil: | |
|---|---|
| Feststoffe | 75 % |
| Flüssigkeit | 25 % |

| Temperaturprofil: | |
|---|---|
| Zone 1 | 50°C |
| Zone 2 | 80°C |
| Zone 3 | 140°C |
| Zone 4 | 140°C |
| Zone 5 | 100°C |
| Zone 6 | 60°C |
| Düse | 60°C |

| | |
|---|---|
| Drehzahl | 170 $min^{-1}$ |
| Drehmoment | 20 % |
| Druck | 60 bar |
| Aufblasverhältnis | 1:4 |

Es wurde eine transparente Folie mit folgenden Eigenschaften erhalten:

| | |
|---|---|
| Folienstärke | 30 µm |
| Reißfestigkeit längs | 10,2 $N/mm^2$ |
| Reißfestigkeit quer | 9,4 $N/mm^2$ |
| Dauer der Auflösung von 10 g Folie in 100 g Wasser bei 20°C | 11 Minuten |

**Beispiel 3**

Eine Feststoffmischung aus Kartoffelstärke und einem Emulgator (Mono-Diglycerid) sowie die flüssigen Komponenten Wasser und Glycerin wurden kontinuierlich der Zweiwellenschneckenmaschine zugeführt:

| Feststoffe: | |
|---|---|
| Kartoffelstärke | 99 % |
| Emulgator | 1 % |
| | 100 % |

| Flüssige Additive: | |
|---|---|
| Wasser | 10 % |
| Glycerin | 90 % |
| | 100 % |

| Mischungsverhältnis im Verfahrensteil: | |
|---|---|
| Feststoffe | 75 % |
| Flüssigkeit | 25 % |

| Temperaturprofil: | |
|---|---|
| Zone 1 | 50°C |
| Zone 2 | 80°C |
| Zone 3 | 160°C |
| Zone 4 | 160°C |
| Zone 5 | 120°C |
| Zone 6 | 60°C |
| Düse | 60°C |

| | |
|---|---|
| Drehzahl | 230 $min^{-1}$ |
| Drehmoment | 15 % |
| Druck | 52 bar |
| Aufblasverhältnis | 1:4 |

Es wurde eine transparente Folie mit folgenden Eigenschaften erhalten:

| | |
|---|---|
| Folienstärke | 33 µm |
| Reißfestigkeit längs | 9,4 $N/mm^2$ |
| Reißfestigkeit quer | 8,2 $N/mm^2$ |
| Dauer der Auflösung von 10 g Folie in 100 g Wasser bei 20°C | 8 Minuten |

**Beispiel 4**

Eine Feststoffmischung aus Maisstärke und einem Emulgator (Mono-Diglycerid) sowie die flüssigen Komponenten Wasser und Glycerin wurden kontinuierlich der Zweiwellenschneckenmaschine zugeführt.

| Feststoffe: | |
|---|---|
| Maisstärke | 98 % |
| Emulgator | 2 % |
| | 100 % |

| Flüssige Additive: | |
|---|---|
| Wasser | 14 % |
| Glycerin | 86 % |
| | 100 % |

| Mischungsverhältnis im Verfahrensteil: | |
|---|---|
| Feststoffe | 70 % |
| Flüssigkeit | 30 % |

| Temperaturprofil: | |
|---|---|
| Zone 1 | 50°C |
| Zone 2 | 80°C |
| Zone 3 | 140°C |
| Zone 4 | 140°C |
| Zone 5 | 100°C |
| Zone 6 | 60°C |
| Düse | 60°C |

| | |
|---|---|
| Drehzahl | 200 $min^{-1}$ |
| Drehmoment | 18 % |
| Druck | 45 bar |
| Aufblasverhältnis | 1:3 |

Es wurde eine opake Folie mit folgenden Eigenschaften erhalten:

| | |
|---|---|
| Folienstärke | 42 µm |
| Reißfestigkeit längs | 8,2 $N/mm^2$ |
| Reißfestigkeit quer | 6,8 $N/mm^2$ |
| Dauer der Auflösung von 10 g Folie in 100 g Wasser bei 20°C | 24 Minuten |

**Vergleichs-Beispiel**

Eine Feststoffmischung aus Weizenmehl und einem Emulgator (Mono-Diglycerid) sowie die flüssigen Komponenten Wasser und Gylcerin wurden kontinuierlich der Zweiwellenschneckenma-schine zugeführt.

| Feststoffe: | |
|---|---|
| Weizenmehl Typ 405 | 98 % |
| Emulgator | 2 % |
| | 100 % |

| Flüssige Additive: | |
|---|---|
| Wasser | 25 % |
| Glycerin | 75 % |
| | 100 % |

| Mischungsverhältnis im Verfahrensteil: | |
|---|---|
| Feststoffe | 70 % |
| Flüssigkeit | 30 % |

| Temperaturprofil: | |
|---|---|
| Zone 1 | 50°C |
| Zone 2 | 80°C |
| Zone 3 | 140°C |
| Zone 4 | 140°C |
| Zone 5 | 100°C |
| Zone 6 | 60°C |
| Düse | 60°C |

| | |
|---|---|
| Drehzahl | 200 min$^{-1}$ |
| Drehmoment | 20 % |
| Druck | 55 bar |

Das Material wurde über eine Flachschlitzdüse ausgeformt und zu einer Folie ausgewalzt.

Es wurde eine opake Folie mit folgenden Eigenschaften erhalten:

| | |
|---|---|
| Folienstärke | 94 µm |
| Reißfestigkeit längs | 9,6 N/mm$^2$ |
| Reißfestigkeit quer | 9,0 N/mm$^2$ |
| Dauer der Auflösung von 10 g Folie in 100 g Wasser bei 20°C | 64 Minuten |

**Beispiel 5**

Eine Feststoffmischung aus Kartoffelstärke und einem Emulgator (Mono-Diglycerid) sowie die flüssigen Komponenten Wasser und Glycerin wurden kontinuierlich der Zweiwellenschneckenmaschine zugeführt. Am Ende der Zweiwellenzone wurde das Material über eine Zahnradpumpe zu einer Ringdüse befördert.

| Feststoffe: | |
|---|---|
| Kartoffelstärke | 99 % |
| Emulgator | 1 % |
| | 100 % |

| Flüssige Additive: | |
|---|---|
| Wasser | 14 % |
| Glycerin | 86 % |
| | 100 % |

| Mischungsverhältnis im Verfahrensteil: | |
|---|---|
| Feststoffe | 80 % |
| Flüssigkeit | 20 % |

| Temperaturprofil: | |
|---|---|
| Zone 1 | 50°C |
| Zone 2 | 100°C |
| Zone 3 | 140°C |
| Zone 4 | 140°C |
| Zone 5 | 80°C |
| Zone 6 | 40°C |
| Düse | 50°C |

| Drehzahl | 200 $min^{-1}$ |
|---|---|
| Drehmoment | 62 % |
| Druck Pumpeneingang | 80 bar |
| Druck Pumpenausgang | 210 bar |
| Aufblasverhältnis | 1:4 |

Es wurde eine transparente Folie mit folgenden Eigenschaften erhalten:

| Folienstärke | 29 µm |
|---|---|
| Reißfestigkeit längs | 14,1 $N/mm^2$ |
| Reißfestigkeit quer | 12,6 $N/mm^2$ |
| Dauer der Auflösung von 10 g Folie in 100 g Wasser bei 20°C | 10 Minuten |

**Beispiel 6**

Eine Feststoffmischung aus Kartoffelstärke und einen Emulgator (Mono-Diglycerid) sowie die flüssigen Komponenten Wasser und Glycerin wurden kontinuierlich der Zweiwellenschneckenmaschine zugeführt. Am Ende der Zweiwellenzone wurde das Material auf zwei Einfachschnecken übergeben und von da zu einer Doppelringdüse 8 befördert. In dieser wurden aus den beiden Produktströmen zwei konzentrische Schläuche geformt, die so erhaltenen Schläuche sofort aufeinander laminiert und gemeinsam zu einer Folie geblasen.

| Feststoffe: | |
|---|---|
| Kartoffelstärke | 99 % |
| Emulgator | 1 % |
| | 100 % |

| Flüssige Additive: | |
|---|---|
| Wasser | 20 % |
| Glycerin | 80 % |
| | 100 % |

| Mischungsverhältnis im Verfahrensteil: | |
|---|---|
| Feststoffe | 75 % |
| Flüssigkeit | 25 % |

| Temperaturprofil: | |
|---|---|
| Zone 1 | 50°C |
| Zone 2 | 100°C |
| Zone 3 | 120°C |
| Zone 4 | 120°C |
| Zone 5 | 80°C |
| Zone 6 | 60°C |
| Düse | 70°C |

| Drehzahl | 160 $min^{-1}$ |
|---|---|
| Drehmoment | 44 % |
| Druck | 50 bar |
| Aufblasverhältnis | 1:4 |

Es wurde eine transparente Folie mit folgenden Eigenschaften erhalten:

| Folienstärke | 38 µm |
|---|---|
| Reißfestigkeit längs | 11,4 $N/mm^2$ |
| Reißfestigkeit quer | 9,4 $N/mm^2$ |
| Dauer der Auflösung von 10 g Folie in 100 g Wasser bei 20°C | 31 Minuten |

**Patentansprüche**

**1.** Verfahren zum Herstellen von biologisch abbaubaren Folien auf Basis von pflanzlichen Rohstoffen in Form von Stärke oder Stärkederivaten, Cellulosederivaten oder Pflanzengummi, dadurch gekennzeichnet, daß die Plastifizierung des pflanzlichen Rohstoffs und die anschließende Folienherstellung kontinuierlich und einstufig mit den Schritten erfolgen:

a) kontinuierliches Zuführen von dosierten pflanzlichen Rohstoffen und gegebenenfalls festen Additiven durch einen ersten Einlaß (11) sowie gegebenenfalls von flüssigen Additiven durch einen zweiten Einlaß (12) in einer ersten Zone (1) und Durchmischen,

b) Erhitzen und Kneten der Mischung in einer zweiten Zone (2) und gegebenenfalls kontinuierliches Zuführen von flüssigen Additiven durch einen dritten Einlaß (13) und

c) Erhitzen und Reaktion der pflanzlichen Rohstoffe mit den zugegebenen Additiven in einer dritten Zone (3) zur Ausbildung einer Schmelze,

d) Evakuieren der Schmelze durch eine Vakuumeinrichtung (14) in einer vierten Zone (4), wobei Wasser aus der Schmelze verdampft und abgesaugt und die Schmelze dadurch abgekühlt wird,

e) weiteres Abkühlen der Schmelze in einer fünften Zone (5)

f) Komprimieren der Schmelze in einer sechsten Zone (6),

g) Blasextrusion der Schmelze durch eine Düse (7; 8), um eine Folie (15) auszubilden,

wobei im Verfahrensschritt a) und/oder b) mindestens ein Additiv zugegeben wird.

**2.** Verfahren nach Anspruch 1, wobei ferner im Schritt a) kontinuierlich feste Additive durch den ersten Einlaß (11), und flüssige Additive durch einen zweiten Einlaß (12) zugeführt werden, und im Schritt b) kontinuierlich flüssige Additive durch einen dritten Einlaß (13) zugeführt werden und die zugegebenen Additive im Schritt c) mit den pflanzlichen Rohstoffen erhitzt werden und reagieren.

**3.** Verfahren nach anspruch 1 oder 2, dadurch gekennzeichnet, daß innerhalb des Verfahrens eine Modifizierung und/oder Desintegrierung des Rohstoffs erfolgt.

**4.** Verfahren nach einem der Ansprüche 1 bis 3, dadurch gekennzeichnet, daß der pflanzliche Rohstoff eine native Stärke in natürlicher oder Hybridform, die beispielsweise der Kartoffel, dem Maniok, der Erbse, der Bohne, dem Mais, dem wachsigen Mais, dem Mais mit hohem Amylosegehalt, dem Getreide, wie Weizen und Fraktionen, die hieraus hergestellt sein können, der Gerste oder dem Sorghum entstammen, ein Stärkederivat, das aus einer auf physikalischem und/oder chemischem Weg modifizierten Stärke besteht, ein Cellulosederivat, ein Pflanzengummi, eine Hemicellulose, oder ein Hydrokolloid ist oder ein Gemisch aus einem oder mehreren dieser Rohstoffe ist.

**5.** Verfahren nach einem der Ansprüche 1 bis 4, dadurch gekennzeichnet, daß der Transport der Mischung bzw. der Schmelze, das Durchmischen und das Komprimieren in der ersten bis sechsten Zone (1 bis 6) mittels einer Schnekkenvorrichtung (10) in Abhängigkeit von der Konfiguration der Schneckenelemente in den jeweiligen Zonen (1 bis 6) und der Schneckendrehzahl erfolgt.

**6.** Verfahren nach einem der Ansprüche 1 bis 5, dadurch gekennzeichnet, daß in der ersten bis sechsten Zone (1 bis 6) die Temperatur selektiv einstellbar ist.

**7.** Verfahren nach einem der Ansprüche 1 bis 6, dadurch gekennzeichnet, daß die Düse eine Ringdüse (7) ist und eine geblasene Folie (15) geformt wird.

**8.** Verfahren nach einem der Ansprüche 1 bis 7, dadurch gekennzeichnet, daß die Düse eine Doppelringdüse (8) ist und eine geblasene Folie (15) geformt wird.

**9.** Verfahren nach einem der Ansprüche 1 bis 8, dadurch gekennzeichnet, daß vor dem ersten Einlaß (11) eine Dosiereinrichtung (17) für die pflanzlichen Rohstoffe und die Additive angeordnet ist.

**10.** Verfahren nach einem der Ansprüche 4 bis 9, dadurch gekennzeichnet, daß zwischen der Schneckenvorrichtung (10) und der Düse (7, 8) eine Zahnradpumpe (18) oder mindestens eine Einfachschnecke (19) angeordnet ist.

**11.** Verfahren nach einem der Ansprüche 4 bis 10, dadurch gekennzeichnet, daß die Schneckenvorrichtung (10) eine Zweiwellenschneckenmaschine ist.

**12.** Verfahren nach Anspruch 11, dadurch gekennzeichnet, daß die Zweiwellenschneckenmaschine (10) folgende Konfiguration aufweist:

a) in der ersten und zweiten Zone (1 bzw. 2) rechtsgängig,
b) in der dritten Zone (3) einfach oder mehrfach abwechselnd rechts- und linksgängig,
c) in der vierten und der fünften Zone (4 bzw. 5) steil rechtsgängig und
d) in der sechsten Zone (6) flach rechtsgängig.

**13.** Verfahren nach einem der Ansprüche 5 bis 12, dadurch gekennzeichnet, daß das folgende Temperaturregime gefahren wird: erste Zone (1): 10 bis 80°C; zweite Zone (2) : 10 bis 150°C; dritte Zone (3): 70 bis 200°C; vierte Zone (4): 70 bis 200°C; fünfte Zone (5): 70 bis 200°C; sechste Zone (6): 40 bis 200°C; an der Düse (7; 8): 40 bis 150°C.

**14.** Verfahren nach einem der Ansprüche 1 bis 13, dadurch gekennzeichnet, daß die Folien in der Trockenmasse 40 bis 100 Gew.-% Stärke oder Stärkederivate, Cellulosederivate oder Pflanzengummi enthalten.

**15.** Verfahren nach einem der Ansprüche 1 bis 14, dadurch gekennzeichnet, daß als ein Additiv Glycerin-Monostearat hals Emulgator zugeführt wird.

**16.** Verfahren nach einem der Ansprüche 1 bis 15, dadurch gekennzeichnet, daß als ein Additiv Glycerin als Plastifizierungsmittel zugeführt wird.

**17.** Verfahren nach einem der Ansprüche 1 bis 16, dadurch gekennzeichnet, daß als ein Additiv Wasser als Lösungsmittel zugeführt wird.

**18.** Verfahren nach einem der Ansprüche 5 bis 17, dadurch gekennzeichnet, daß als ein Additiv Kaliumsorbat als Konservierungsmittel zugeführt wird.

**19.** Verfahren nach einem der Ansprüche 1 bis 18, dadurch gekennzeichnet, daß die Folien (15) in der Trockenmasse 0 bis 25 Gew.-% Glycerin-monostearat, 0 bis 40 Gew.-% Glycerin; und 0 bis 5 Gew.-% Kaliumsorbat enthalten.

**20.** Verfahren nach einem der Ansprüche 1 bis 19, dadurch gekennzeichnet, daß die Folien (15) 0 bis 35 Gew.-%, Wasser enthalten.

**Claims**

**1.** A method for preparing biodegradable films on the basis of plant-based raw materials in the form of starch or starch derivatives, cellulose derivatives or gum, characterized in that the plastification of the plant-based raw materials and subsequent film preparation are done continuously and in one step comprising the steps of:

a) continuously adding measured plant-based raw materials and, if desired, solid additives through a first inlet (11) as well as, if desired, liquid additives through a second inlet (12) in a first section (1) and mixing them,

b) heating and kneading the mixture in a second section (2) and optionally continuously adding liquid additives through a third inlet (13),

c) heating and reacting the plant-based raw materials with the added additives in a third section (3) to form a melt,

d) evacuating said melt in a vacuum apparatus (14) in a fourth section (4), wherein water is allowed to evaporate from the melt and removed by extraction, thus causing the melt to cool down,

e) further cooling the melt in a fifth section (5),

f) compressing the melt in a sixth section (6),

g) blow extruding the melt through a die (7; 8) to form a film (15),

wherein in process step a) and/or b) at least one additive is added.

**2.** The method according to claim 1 wherein in step a) solid additives are additionally added continuously through the fisrt inlet (11) and liquid additives through a second inlet (12), and in step b) liquid additives are added continuous through a third inlet (13) and in step c) the added additives are heated together with the plant-based raw materials and react with them.

**3.** The method according to claim 1 or 2, characterized in that the raw materials are modified and/or disintegrated during the process.

**4.** The method according to any one of claims 1 to 3, characterized in that the plant-based raw material is a native starch in a natural or hybrid form derived, for example, from potatoes, manioc, peas, beans, corn, wax corn, corn with high amylose content, grain such as wheat and fractions prepared therefrom, barley or sorghum, starch derivatives consisting of physically and/or chemically modified starch, cellulose derivative, gum, hemicellulose, or a hydrocolloid or a mixture of one or a plurality of these raw materials.

**5.** The method according to any one of claims 1 to 4, characterized in that the mixture or melt is transported, mixed and compressed in the first to sixth sections (1 to 6) by means of a screw-type extruder (10), depending on the configuration of the screw elements in each of one sections (1 to 6) and on the rotational speed of the screws.

**6.** The method according to any one of claims 1 to 5, characterized in that in the first to sixth sections (1 to 6) the temperature may be adjusted selectively.

7. The method according to any one of claims 1 to 6, characterized in that the die is a tubular die (7) and a blown film (15) is molded.

8. The method according no any one of claims 1 to 7, characterized in that the die is a double tubular die (8) and a blown film (15) is molded.

9. The method according to any one of claims 1 to 8, characterized in that a metering device (17) for the plant-based raw materials and additives is provided upstream of the first inlet (11).

10. The method according to any one of claims 4 to 9, characterized in that a gear pump (18) or at least one one-lead screw (19) is provided between the screw-type extruder (10) and the die (7, 8).

11. The method according to any one of claims 4 to 10, characterized in that the screw-type extruder (10) is a two-shaft screw-type extruder.

12. The method according to claim 11, characterized in that the two-shaft screw-type extruder (10) has the following configuration:

a) right-handed in the first and second sections (1 and 2, respectively),
b) right- and left-handed in the third section (3) while alternating one or several times,
c) steeply right-handed in the fourth and fifth sections (4 and 5, respectively), and
d) flatly right-handed in the sixth section (6).

13. The method according to any one of claims 5 to 12, characterized in that the following temperature conditions are adhered to: first section (1): 10 to 80°C; second section (2): 10 to 150°C; third section (3): 70 to 200°C; fourth section (4): 70 to 200°C; fifth on (5): 70 to 200°C; sixth section (6): 40 to 200°C; at the die (7; 8): 40 to 150°C.

14. The method according to any one of claims 1 to 13, characterized in that the films in the dry state contain 40 to 100 % by wt. of starch or starch derivatives, cellulose derivatives or gum.

15. The method according to any one of claims 1 to 14, characterized in that glycerin monostearate is added as an additive to act as an emulsifier.

16. The method according to any one of claims 1 to 15, characterized in that glycerin is added as an additive to act as a plastifier.

17. The method according to any one of claims 1 to 16, characterized in that water is added as an additive to act as a solvent.

18. The method according to any one of claims 5 to 17, characterized in that potassium sorbate is added as an additive to act as a preservative.

19. The method according to any one of claims 1 to 18, characterized in that the films (15) in the dry state contain 0 to 25 % by wt. of glycerin monostearate, 0 to 40 % by wt. of glycerine, and 0 to 5 % by wt. of potassium sorbate.

20. The method according to any one of claims 1 to 19 wherein the films (15) contain 0 to 35 % by wt. of water.

**Revendications**

1. Procédé de fabrication de films biodégradables à base de matières premières végétales sous forme d'amidon ou de dérivés d'amidon, de dérivés de cellulose ou de gomme végétale,
caractérisé en ce que
la plastification de la matière première végétale suivie par la fabrication du film s'effectue de façon continue et en une fois avec les étapes suivantes :

- a) Apport continu de matières premières végétales dosées et le cas échéant d'additifs soles par une a première entrée (11) ainsi que le cas échéant d'additifs liquides par une seconde entrée (12) dans une première zone (1) et mélange approfondi,
- b) chauffage et pétrissage du mélange dans une seconde zone (2) et le cas échéant introduction continue d'additifs liquides par une troisième entrée (13) et
- c) chauffage et réaction des matières premières végétales avec les additifs ajoutés dans une troisième zone (3) pour la formation d'une masse fondue,
- d) réalisation d'un vide dans la masse fondue par un dispositif de vide (14) dans une quatrième zone (4), ce qui fait évaporer l'eau de la masse fondue et la filtre par succion, et ce qui refroidit ainsi la masse fondue,
- e) poursuite du refroidissement de la masse fondue dans une cinquième zone (5),
- f) compression de la masse fondue dans une sixième zone (6),
- g) extrusion par soufflage de la masse fondue à travers une buse (7;8) pour former un film (15),
- où dans les étapes a) et/ou b) du procédé on ajoute au moins un additif.

**2.** Procédé selon la revendication 1,
dans lequel

- en outre dans l'étape a) on introduit de façon continue des additifs solides par la première entrée (11) et les additifs liquides par une seconde entrée (12),
- et dans l'étape b) on introduit de façon continue les additifs liquides par une troisième entrée (13) et on chauffe et on fait réagir les additifs ajoutés dans l'étape c) avec les matières premières végétales.

**3.** Procédé selon la revendication 1 ou 2,
caractérisé en ce au'
à l'intérieur du procédé on procède à une modification et/ou à une désintégration de la matière première.

**4.** Procédé selon l'une des revendications 1 à 3,
caractérisé en ce que
la matière première végétale est un amidon natif sous forme naturelle ou hybride, qui provient par exemple de la pomme de terre, du manioc, du petit pois, du haricot, du maïs, du maïs visqueux, du maïs à haute teneur en amylose, des céréales, comme le blé et les fractions que l'on peut fabriquer à partir du blé, de l'orge ou du sorgho, un dérivé d'amidon qui se compose d'un amidon modifié par un moyen physique et/ou chimique, un dérivé de cellulose, une gomme végétale, une hémocellulose ou un hydrocolloïde, ou un mélange d'un ou plusieurs de ces matières premières.

**5.** Procédé selon l'une des revendications 1 à 4,
caractérisé en ce que
le transport du mélange ou selon les cas de la masse fondue, le mélange à fond et la compression dans les première à sixième zones (1 à 6) se font au moyen d'un dispositif à vis sans fin (10) en fonction de la configuration des éléments de vis sans fin dans les zones (1 à 6) considérées et de la rotation de vis sans fin.

**6.** Procédé selon l'une des revendications 1 à 5,
caractérisé en ce que
dans les première à sixième zones (1 à 6), la température est réglable de manière sélective.

**7.** Procédé selon l'une des revendications 1 à 6,
caractérisé en ce que
la buse est une buse annulaire (7) et est formée par un film soufflé (15).

**8.** Procédé selon l'une des revendications 1 à 7,
caractérisé en ce que
la buse est une buse annulaire double (8) et en ce qu'on forme un film soufflé (15).

**9.** Procédé selon l'une des revendications 1 à 8,
caractérisé en ce au'
avant la première entrée (11) on dispose un appareil de dosage (17) pour les matières premières végétales et les additifs.

**10.** Procédé selon l'une des revendications 4 à 9,
caractérisé en ce qu'
entre le dispositif à vis sans fin (10) et la buse (7, 8) est disposée une pompe avec roue dentée (18) ou au moins une vis sans fin simple (19).

**11.** Procédé selon l'une des revendications 4 à 10,
caractérisé en ce que
le dispositif à vis sans fin (10) est une presse à deux cylindres.

**12.** Procédé selon la revendication 11,
caractérisé en ce que
la presse à deux cylindres (10) présente la configuration suivante :

- a) dans la première et la seconde zones (1 ou selon les cas 2) tournant à droite,
- b) dans la troisième zone (3) tournant à droite et à gauche une ou plusieurs fois de façon alternée,
- c) dans la quatrième et la cinquième zone (4 ou selon les cas 5) tournant brusquement à droite, et
- d) dans la dixième zone (6) tournant à droite selon un faible rayon de courbure.

**13.** Procédé selon l'une des revendications 5 à 12,
caractérisé en ce au'
on observe le régime de température suivant : première zone (1) : 10 à 80°C ; deuxième zone (2) : 10 à 150°C ; (3) troisième zone (3) : 70 à 200°C ; quatrième zone (4) : 70 à 200°C ; cinquième zone (5) : 70 à 200°C ; sixième zone (6) : 40 à 200°C ; sur la buse (7;8) 40 à 150°C.

**14.** Procédé selon l'une des revendications 1 à 13,
caractérisé en ce que
les films en poids sec contiennent de 40 à 100 % en poids d'amidon ou de dérivés d'amidon, de dérivés de cellulose ou de gomme végétale.

**15.** Procédé selon l'une des revendications 1 à 14,
caractérisé en ce qu'
on introduit un additif de monostéarate de glycérine comme émulsifiant.

**16.** Procédé selon l'une des revendications 1 à 15,
caractérisé en ce qu'
on introduit comme additif la glycérine en tant qu'agent plastifiant.

**17.** Procédé selon l'une des revendications 1 à 16,
caractérisé en ce qu'
on introduit comme additif l'eau en tant que solvant.

**18.** Procédé selon l'une des revendications 5 à 17,
caractérisé en ce qu'
on introduit comme additif le sorbate de potassium en tant qu'agent de conservation.

**19.** Procédé selon l'une des revendications 1 à 18,
caractérisé en ce que
les films (15) contiennent en poids sec de 0 à 25 % en poids de monostéarate de glycérine, de 0 à 40 % en poids de glycérine et de 0 à 5 % en poids de sorbate de potassium.

**20.** Procédé selon l'une des revendications 1 à 19, caractérisé en ce que
les films (15) contiennent de 0 à 35 % en poids d'eau.

17
12
13
14
15
11
1
2
3
4
5
6
7

Fig. 1 a

11
12
13
14
15
7
1
2
3
4
5
6

Fig. 1 b

17
12
13
14
11
9
16
1
2
3
4
5
6

Fig. 2 a

11
12
13
14
9
16
1
2
3
4
5
6

Fig. 2 b

Fig. 3 a
15
8
19
10
Fig. 3 b
15
7
18
10
Fig. 3 c
9
16
10